# EUROPÄISCHE PATENTANMELDUNG

(11) **EP 3 745 320 A1**
(43) Veröffentlichungstag der Anmeldung: **02.12.2020**
(21) Anmeldenummer: 19176719.3
(22) Anmeldetag: 27.05.2019
(51) Int. Cl.: G06N 5/00

(54) **VERFAHREN UND VORRICHTUNG ZUR OPTIMALEN KONFIGURATION EINES GERÄTS**

(71) Anmelder: Siemens AG Österreich, 1210 Wien (AT)
(72) Erfinder: Taupe, Richard, 1160 Wien (AT); Falkner, Andreas, 1140 Wien (AT); Schenner, Gottfried, 1200 Wien (AT)
(74) Vertreter: Maier, Daniel Oliver

(57) **Zusammenfassung**

Verfahren zur optimalen Konfiguration eines Geräts (1), wobei folgende Schritte ausgeführt werden:
a1) Definieren eines ersten Datensatzes (101), welcher ein Konfigurationsproblem mittels GCSP beschreibt,
b1) Übersetzen des ersten Datensatzes (101) in einen zweiten Datensatz (102), welcher ein "Answer Set Program" bildet und weiterhin das Konfigurationsproblem beschreibt,
c1) Ermitteln einer "Answer Set"-Lösung für das Konfigurationsproblem als dritten Datensatz (103) mithilfe des zweiten Datensatzes (102) und eines ASP-Lösers, welcher auf dem Prinzip des "Lazy-Grounding" basiert,
d1) Übersetzen des dritten Datensatzes (103) in einen vierten Datensatz (104), welcher eine Konfiguration für das Gerät (1) in Form einer GCSP-Lösung für das Konfigurationsproblem aus Schritt a1) beschreibt,
e1) Konfigurieren des Geräts (1) mithilfe des vierten Datensatzes (104).

## Beschreibung

Die Erfindung betrifft ein Verfahren zur optimalen Konfiguration eines Geräts und ein Verfahren zum Ansteuern eines Geräts mit einer optimalen Konfiguration.

Ferner betrifft die Erfindung eine Konfigurations-Vorrichtung zum optimalen Konfigurieren eines Geräts und eine Steuer-Vorrichtung zum Ansteuern eines optimal konfigurierten Geräts.

In industriellen Umgebungen treten häufig Probleme mit der Produktkonfiguration im großen Maßstab auf. Diese Probleme haben in der Regel viele Komponententypen (> 100) und Instanzen (> 1 000), bei denen die genaue Anzahl der in einer Lösung enthaltenen Komponenten im Voraus nicht bekannt ist. Man spricht daher auch von einer Unendlichkeit an Eingaben, welche bei deren Lösung berücksichtigt werden muss.

Die Ansätze im Stand der Technik zur Lösung von Konfigurationsaufgaben mit unendlichen Eingaben haben den Nachteil, dass häufig eine Implementierung eines prozeduralen Lösers erforderlich ist, der speziell für die Lösung von GCSP entwickelt wurde.

Das Generative Constraint Satisfaction Problem (GCSP) ist ein mathematischer Formalismus, um Probleme mit unendlichen Eingaben zu spezifizieren. Im Stand der Technik fehlen derzeit jedoch effiziente Löser für solche Spezifikationen.

Andere Ansätze umgehen eine Unendlichkeit von Eingabeproblemen, indem sie sie endlich machen, z. durch Einschränkung der maximalen Anzahl von Komponenten, die konfiguriert werden können. Dies macht das Problem von Standardlösern im Prinzip lösbar, wenn die maximale Problemgröße bekannt ist. Große Lösungen sind jedoch aufgrund des Speicherverbrauchs solcher Systeme immer noch nicht im Umfang enthalten. Man spricht vom sogenannten "grounding bottleneck" (Grundierungsengpass).

Es ist Aufgabe der Erfindung ein effizientes Verfahren zum Lösen von Problemen mit unendlichen Eingaben bereitzustellen.

Die erfindungsgemäße Aufgabe wird durch ein Verfahren zur optimalen Konfiguration eines Geräts gelöst, wobei folgende Schritte ausgeführt werden:
a1) Definieren eines ersten Datensatzes, welcher ein Konfigurationsproblem mittels GCSP beschreibt,
b1) Übersetzen des ersten Datensatzes in einen zweiten Datensatz, welcher ein "Answer Set Program" bildet und weiterhin das Konfigurationsproblem beschreibt,
c1) Ermitteln einer "Answer Set"-Lösung für das Konfigurationsproblem als dritten Datensatz mithilfe des zweiten Datensatzes und eines ASP-Lösers, welcher auf dem Prinzip des "Lazy-Grounding" basiert,
d1) Übersetzen des dritten Datensatzes in einen vierten Datensatz, welcher eine Konfiguration für das Gerät in Form einer GCSP-Lösung für das Konfigurationsproblem aus Schritt a1) beschreibt,
e1) Konfigurieren des Geräts mithilfe des vierten Datensatzes.

Die Erfindung stellt als Lösung der erfindungsgemäßen Aufgabe ein Verfahren zum Lösen von Problemen bereit, die in Form eines GCSP spezifiziert sind.

Dies kann beispielsweise das Auffinden eines Satzes von Komponenteninstanzen, ihrer Attributwerte und Verbindungen sein, welche zusammen die Einschränkungen des ursprünglichen Konfigurationsproblems erfüllen.

Ein Constraint-Satisfaction-Problem (CSP; "Bedingungserfüllungsproblem") ist eine Aufgabenstellung aus der künstlichen Intelligenz und aus dem Operations Research. Aufgabe ist es, einen Zustand (d.h. Belegungen von Variablen) zu finden, der alle aufgestellten Bedingungen (Constraints) erfüllt.

Ein Constraint-Satisfaction-Problem besteht aus einer Menge von Variablen, ihren Wertebereichen und den Bedingungen, die Verknüpfungen zwischen den Variablen herstellen und dadurch festlegen, welche Kombinationen von Werten der Variablen zulässig sind. Auf diese Weise lassen sich eine Vielfalt von Problemen aus Informatik, Mathematik und weiteren Anwendungsgebieten formulieren.

Dem entspricht in der elementaren Mathematik das Lösen einer Gleichung oder eines Gleichungssystems - als Constraint-Satisfaction-Probleme bezeichnet man speziell die Fragestellungen, die sich analytisch so nicht oder nur aufwändig lösen lassen.

Ein CSP wird gelöst, indem eine Belegung der Variablen gefunden wird, die allen Bedingungen genügt. Im Unterschied zu anderen Optimierungsproblemen, in denen eine "möglichst gute" Lösung gesucht wird, fordern Constraint-Satisfaction-Probleme eine vollständige Erfüllung jeder der einzelnen Vorbedingungen. Sind die aufgestellten Bedingungen widersprüchlich, so gibt es keine Lösung des Problems (respektive umgekehrt: gibt es nachweislich keine Lösung, sind die Vorbedingungen als unvereinbar bewiesen). Es kann aber durchaus mehrere oder viele Lösungen geben. Gibt es nur eine, spricht man wie bei anderen Optimierungsfragen von einer "eindeutigen Lösung".

Da GCSP ein deklaratives Paradigma ist, ist es vorteilhaft, es in ein anderes deklaratives Paradigma zu übersetzen, für das bereits leistungsfähige domänenunabhängige Löser existieren. Dies geschieht erfindungsgemäß durch ASP.

Bei ASP ("answer set programming") handelt es sich um ein auf "logic programming" basierendes, deklaratives Programm, welches sich mit schweren, insbesondere auf NP-Niveau befindenden, Suchproblemen befasst. Es handelt es sich somit um nichtmonotones Denken. Es wurde basierend auf den Semantiken von logischem Programmieren geschrieben, dessen Vorläufer wiederum das autoepistemische Programmieren und Standardannahme ("default logic") sind. ASP kann beispielsweise für automatisches Planen, Suchen und Folgern genutzt werden.

Answer Set Programming (ASP) ist eine Form der deklarativen Programmierung, die sich an schwierigen (hauptsächlich NPharten) Suchproblemen orientiert. Es basiert auf der Semantik des stabilen Modells (Antwortmenge) der Logikprogrammierung. In ASP werden Suchprobleme auf die Berechnung stabiler Modelle reduziert, und Antwortsatzlöser - Programme zum Generieren stabiler Modelle - werden zum Durchführen der Suche verwendet. Der Berechnungsprozess, der beim Entwerfen vieler Antwortsatzlöser verwendet wird, ist eine Verbesserung des DPLL-Algorithmus und wird im Prinzip immer beendet (im Gegensatz zur Prolog-Abfragebewertung, die zu einer Endlosschleife führen kann).

Im Allgemeinen umfasst ASP alle Anwendungen von Antwortsätzen für die Wissensrepräsentation und die Verwendung der Abfragebewertung im Prolog-Stil zur Lösung von Problemen, die bei diesen Anwendungen auftreten.

Als "Grounding" bezeichnet man einen Bestandteil des Lösungswegs von ASP.

Lazy Grounding ist eine Variante zu dem eigentlichen Grounding und ist aus dem Grounding entstanden, um die Engpässe des Speichers zu verhindern und die Suche gleichzeitig schneller zu machen. ASP wird bei Suchproblemen angewandt.

Die erfindungsgemäße Aufgabe wird auch durch ein Verfahren zum Ansteuern eines Geräts mit einer optimalen Konfiguration gelöst, wobei folgende Schritte ausgeführt werden:
a2) Ermitteln eines Konfigurationsproblems aus einer Vielzahl von Anforderungsdatensätzen von einer Konfigurations-Vorrichtung,
b2) Konfigurieren des Geräts für das Konfigurationsproblem mittels des erfindungsgemäßen Verfahrens durch die Konfigurations-Vorrichtung, und
c2) Ansteuern des optimal konfigurierten Geräts mit einem Steuerdatensatz durch eine Steuervorrichtung.

Die erfindungsgemäße Aufgabe wird auch durch eine Konfigurations-Vorrichtung zum optimalen Konfigurieren eines Geräts, gelöst, wobei
die Konfigurations-Vorrichtung dazu eingerichtet ist, einen ersten Datensatz, welcher ein Konfigurationsproblem mittels GCSP beschreibt, zu definieren, und
eine erste Übersetzungs-Vorrichtung dazu eingerichtet ist, den ersten Datensatz in einen zweiten Datensatz, welcher ein "Answer Set Program" bildet und weiterhin das Konfigurationsproblem beschreibt, zu übersetzen, und
ein ASP-Löser, welcher auf dem Prinzip des "Lazy-Grounding" basiert, dazu eingerichtet ist, eine "Answer Set"-Lösung für das Konfigurationsproblem als dritten Datensatz mithilfe des zweiten Datensatzes zu ermitteln, und
eine zweite Übersetzungs-Vorrichtung dazu eingerichtet ist, den dritten Datensatz in einen vierten Datensatz, welcher eine Konfiguration für das Gerät in Form einer GCSP-Lösung für das Konfigurationsproblem aus Schritt a1) beschreibt, zu übersetzen, und
eine Konfigurations-Vorrichtung dazu eingerichtet ist, das Gerät mithilfe des vierten Datensatzes zu konfigurieren.

Die Übersetzung von GCSP nach ASP, das heißt die Kodierung eines Konfigurationsproblems in ASP, ist im Stand der Technik bekannt und wird etwa in der europäischen Patentanmeldung EP 2 884 432 A1 behandelt. Zusätzlich kann eine Generierung eines unendlichen Lösungsraums erfolgen, indem folgende zwei Regeln berücksichtigt werden:
{ potenzielle_komponente(1). }.
{ potenzielle_komponente(C+1) } :- potenzielle_komponente(C).

Die Übersetzung der "Answer Set"-Lösung in eine Lösung des Konfigurationsproblems ist abhängig von der konkreten Kodierung und im Stand der Technik bekannt.

Die erfindungsgemäße Aufgabe wird auch durch eine Steuer-Vorrichtung zum Ansteuern eines optimal konfigurierten Geräts gelöst, wobei die Steuer-Vorrichtung dazu eingerichtet ist, eine Konfigurations-Vorrichtung nach dem vorhergehenden Anspruch anzusteuern,
wobei die eine Konfigurations-Vorrichtung dazu eingerichtet ist, aus einer Vielzahl von Anforderungsdatensätzen ein Konfigurationsproblem zu ermitteln und das Gerät für das Konfigurationsproblem optimal zu konfigurieren, und die Steuer-Vorrichtung ferner dazu eingerichtet ist, das optimal konfigurierte Gerät mit einem Steuerdatensatz anzusteuern.

Die Erfindung wird nachfolgend anhand eines in den beigeschlossenen Zeichnungen dargestellten Ausführungsbeispiels näher erläutert. In den Zeichnungen zeigt:
- Fig. 1: eine schematische Ansicht eines Ausführungsbeispiels des erfindungsgemäßen Verfahrens,
- Fig. 2: eine schematische Ansicht eines Ausführungsbeispiels der erfindungsgemäßen Vorrichtung.

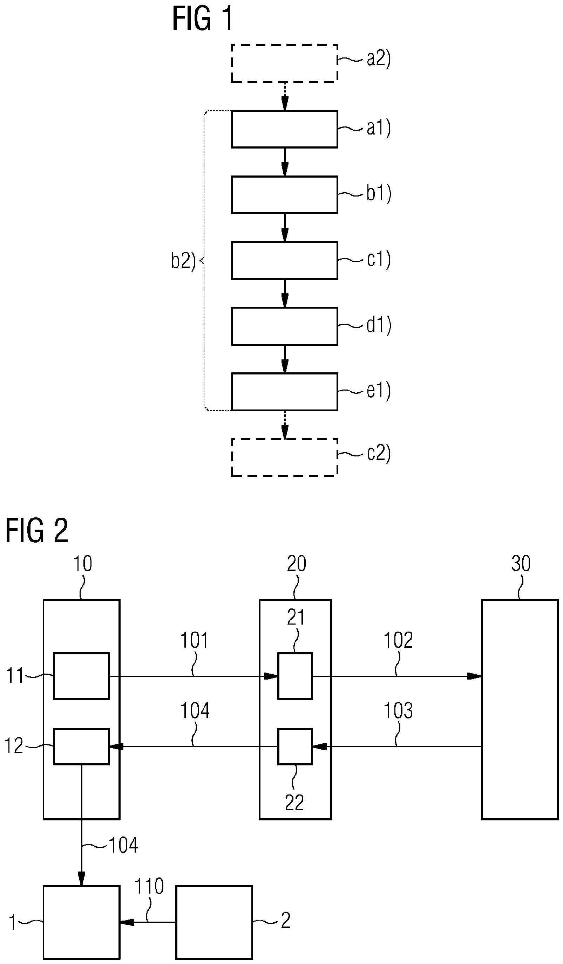

In **Fig. 1** ist ein Ausführungsbeispiel für ein erfindungsgemäßes Verfahren dargestellt.

In einem Verfahren zur optimalen Konfiguration eines Geräts werden folgende Schritte ausgeführt:
a1) Definieren eines ersten Datensatzes 101, welcher ein Konfigurationsproblem mittels GCSP beschreibt,
b1) Übersetzen des ersten Datensatzes 101 in einen zweiten Datensatz 102, welcher ein "Answer Set Program" bildet und weiterhin das Konfigurationsproblem beschreibt,
c1) Ermitteln einer "Answer Set"-Lösung für das Konfigurationsproblem als dritten Datensatz 103 mithilfe des zweiten Datensatzes 102 und eines ASP-Lösers, welcher auf dem Prinzip des "Lazy-Grounding" basiert,
d1) Übersetzen des dritten Datensatzes 103 in einen vierten Datensatz 104, welcher eine Konfiguration für das Gerät 1 in Form einer GCSP-Lösung für das Konfigurationsproblem aus Schritt a1 beschreibt,
e1) Konfigurieren des Geräts 1 mithilfe des vierten Datensatzes 104.

Für ein Verfahren zum Ansteuern eines Geräts 1 mit einer optimalen Konfiguration 104 werden folgende Schritte ausgeführt:
Vor dem Schritt a1) erfolgt ein Schritt a2), in welchem ein Ermitteln eines Konfigurationsproblem aus einer Vielzahl von Anforderungsdatensätzen von einer Konfigurations-Vorrichtung 10 erfolgt.

Die Schritte a1) bis e1) entsprechend dem Schritt b2), in welchem ein Konfigurieren des Geräts 1 für das Konfigurationsproblem durch die Konfigurations-Vorrichtung 10 erfolgt.

Nach dem Schritt e) erfolgt ein Schritt c2), in welchem ein Ansteuern des optimal konfigurierten Geräts 1 mit einem Steuerdatensatz 110 von einer Steuervorrichtung 2 erfolgt.

In **Fig. 2** ist ein Ausführungsbeispiel für eine erfindungsgemäße Vorrichtung dargestellt.

Eine Konfigurations-Vorrichtung 10 zum optimalen Konfigurieren eines Geräts ist dazu eingerichtet, einen ersten Datensatz 101, welcher ein Konfigurationsproblem mittels GCSP beschreibt, mit einer Konfigurations-Ermittlungs-Vorrichtung 11 der Konfigurations-Vorrichtung 10 zu definieren.

Eine erste Übersetzungs-Vorrichtung 21 ist dazu eingerichtet, den ersten Datensatz 101 in einen zweiten Datensatz 102, welcher ein "Answer Set Program" bildet und weiterhin das Konfigurationsproblem beschreibt, zu übersetzen.

Ein ASP-Löser 30, welcher auf dem Prinzip des "Lazy-Grounding" basiert, ist dazu eingerichtet, eine "Answer Set"-Lösung für das Konfigurationsproblem als dritten Datensatz 103 mithilfe des zweiten Datensatzes 102 zu ermitteln.

Eine zweite Übersetzungs-Vorrichtung 22 ist dazu eingerichtet, den dritten Datensatz 103 in einen vierten Datensatz 104, welcher eine Konfiguration für das Gerät 1 in Form einer GCSP-Lösung für das Konfigurationsproblem aus Schritt a1) beschreibt, zu übersetzen.

Die erste und zweite Übersetzungs-Vorrichtung 21, 22 können als eine gemeinsame Vorrichtung 20 ausgeführt sein.

Ferner ist die Konfigurations-Vorrichtung 10 dazu eingerichtet, aus einer Vielzahl von Anforderungsdatensätzen ein Konfigurationsproblem zu ermitteln und das Gerät 1 für das Konfigurationsproblem mithilfe des vierten Datensatzes 104 optimal von einer Konfigurations-Schreibe-Vorrichtung 12 der Konfigurations-Vorrichtung 10 zu konfigurieren.

Eine Steuer-Vorrichtung 2 ist dazu eingerichtet, das optimal konfigurierte Gerät 1 mit einem Steuerdatensatz 110 anzusteuern.

### Bezugszeichenliste:

- 1: Gerät
- 2: Steuervorrichtung
- 10: Konfigurations-Vorrichtung
- 11: Konfigurations-Ermittlungs-Vorrichtung
- 12: Konfigurations-Schreibe-Vorrichtung
- 20-22: Übersetzer
- 30: Lazy Ground ASP Solver
- 101: erster Datensatz, GCSP
- 102: zweiter Datensatz, "Answer Set Programm"
- 103: dritter Datensatz, "Answer Set"
- 104: vierter Datensatz, Lösung
- 110: Steuerdatensatz

## Patentansprüche

1. Verfahren zur optimalen Konfiguration eines Geräts (1), **dadurch gekennzeichnet, dass** folgende Schritte ausgeführt werden:
a1) Definieren eines ersten Datensatzes (101), welcher ein Konfigurationsproblem mittels GCSP beschreibt,
b1) Übersetzen des ersten Datensatzes (101) in einen zweiten Datensatz (102), welcher ein "Answer Set Program" bildet und weiterhin das Konfigurationsproblem beschreibt,
c1) Ermitteln einer "Answer Set"-Lösung für das Konfigurationsproblem als dritten Datensatz (103) mithilfe des zweiten Datensatzes (102) und eines ASP-Lösers, welcher auf dem Prinzip des "Lazy-Grounding" basiert,
d1) Übersetzen des dritten Datensatzes (103) in einen vierten Datensatz (104), welcher eine Konfiguration für das Gerät (1) in Form einer GCSP-Lösung für das Konfigurationsproblem aus Schritt a1) beschreibt,
e1) Konfigurieren des Geräts (1) mithilfe des vierten Datensatzes (104).

2. Verfahren zum Ansteuern eines Geräts (1) mit einer optimalen Konfiguration (104), **dadurch gekennzeichnet, dass** folgende Schritte ausgeführt werden:
a2) Ermitteln eines Konfigurationsproblems aus einer Vielzahl von Anforderungsdatensätzen von einer Konfigurations-Vorrichtung (10),
b2) Konfigurieren des Geräts (1) für das Konfigurationsproblem mittels dem Verfahren nach dem vorhergehenden Anspruch durch die Konfigurations-Vorrichtung (10), und
c2) Ansteuern des optimal konfigurierten Geräts (1) mit einem Steuerdatensatz (110) von einer Steuervorrichtung (2).

3. Konfigurations-Vorrichtung (10) zum optimalen Konfigurieren eines Geräts, **dadurch gekennzeichnet, dass** die Konfigurations-Vorrichtung (10) dazu eingerichtet ist, einen ersten Datensatz (101), welcher ein Konfigurationsproblem mittels GCSP beschreibt, zu definieren, und
eine erste Übersetzungs-Vorrichtung (21) dazu eingerichtet ist, den ersten Datensatz (101) in einen zweiten Datensatz (102), welcher ein "Answer Set Program" bildet und weiterhin das Konfigurationsproblem beschreibt, zu übersetzen, und
ein ASP-Löser (30), welcher auf dem Prinzip des "Lazy-Grounding" basiert, dazu eingerichtet ist, eine "Answer Set"-Lösung für das Konfigurationsproblem als dritten Datensatz (103) mithilfe des zweiten Datensatzes (102) zu ermitteln, und
eine zweite Übersetzungs-Vorrichtung (22) dazu eingerichtet ist, den dritten Datensatz (103) in einen vierten Datensatz (104), welcher eine Konfiguration für das Gerät (1) in Form einer GCSP-Lösung für das Konfigurationsproblem aus Schritt a1) beschreibt, zu übersetzen, und
eine Konfigurations-Vorrichtung (10) dazu eingerichtet ist, das Gerät (1) mithilfe des vierten Datensatzes (104) zu konfigurieren.

4. Steuer-Vorrichtung (2) zum Ansteuern eines optimal konfigurierten Geräts (1), **dadurch gekennzeichnet, dass**
die Steuer-Vorrichtung (2) dazu eingerichtet ist, eine Konfigurations-Vorrichtung (10) nach dem vorhergehenden Anspruch anzusteuern,
wobei die eine Konfigurations-Vorrichtung (10) dazu eingerichtet ist, aus einer Vielzahl von Anforderungsdatensätzen ein Konfigurationsproblem zu ermitteln und das Gerät (1) für das Konfigurationsproblem optimal zu konfigurieren, und
die Steuer-Vorrichtung (2) ferner dazu eingerichtet ist, das optimal konfigurierte Gerät (1) mit einem Steuerdatensatz (110) anzusteuern.
